# EUROPEAN PATENT SPECIFICATION

(11) **EP 3 572 708 B1**
(45) Date of publication and mention of the grant of the patent: **14.04.2021**
(21) Application number: 19165421.9
(22) Date of filing: 27.03.2019
(51) Int. Cl.: F16N 31/00, F16H 57/04, F01M 11/04, F16N 13/20

(54) **APPARATUS FOR REPLACING AN EXHAUSTED TRANSMISSION FLUID OF AN AUTOMATIC GEAR SHIFT OF A MOTOR VEHICLE WITH A FRESH TRANSMISSION FLUID**
VORRICHTUNG, UM EIN VERBRAUCHTES TRANSMISSIONSFLUID EINES AUTOMATIKGETRIEBES EINES KRAFTFAHRZEUGS DURCH EIN FRISCHES TRANSMISSIONSFLUID ZU ERSETZEN
APPAREIL POUR REMPLACER UN FLUIDE DE TRANSMISSION USAGÉ D'UNE BOÎTE DE VITESSES AUTOMATIQUE D'UN VÉHICULE À MOTEUR PAR UN FLUIDE DE TRANSMISSION NEUF

(30) Priority: 22.05.2018 IT 201800005576
(43) Date of publication of application: 27.11.2019
(73) Proprietor: Mahle Aftermarket Italy S.p.A., 43122 Parma (IT)
(72) Inventor: CANTADORI, Andrea, 43123 PARMA (IT)
(74) Representative: Dondi, Silvia

(56) References cited:
- GB-A- 2 202 460
- KR-A- 20070 102 814
- US-A- 5 472 064
- US-A- 5 482 062

## Description

The present invention relates to an apparatus for replacing an exhausted transmission fluid of an automatic gear shift of a motor vehicle with a fresh transmission fluid.

In particular, the apparatus may be used in the maintenance of the automatic gear shift for motor vehicles.

As is known, the transmission fluid of the automatic gear shift, generally denoted using the ATF acronym (Automatic Transmission Fluid) is not a simple lubricating fluid, but acts as a transmission fluid of the drive torque. During the functioning of the gear shift, the ATF tends to heat up, and for this reason a cooling circuit is predisposed comprising at least a pump and a radiator.

As it undergoes wear, the ATF loses viscosity and exposes the automatic gear shift to an increase of wear or faults.

For this reason, it is necessary to periodically replace the ATF, an operation that is carried out in special stations, of which a number of variants exist on the market.

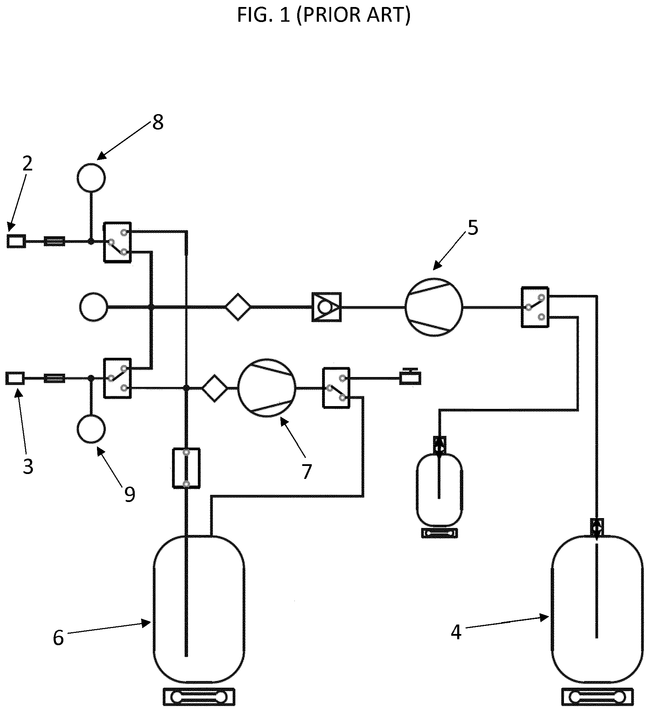

Figure 1 illustrates a replacement station or apparatus of the ATF of known type developed by the Applicant, in which the following in particular are noted:
- two tubes 2, 3 intended to be connected in series to the cooling circuit of the ATF;
- a tank 4 containing the new ATF;
- a discharge tank 6 of the exhausted ATF;
- a first pump 5 for collecting the fresh ATF from the corresponding tank 4;
- a second pump 7 upstream of the discharge tank 6;
- a valve system configured to establish various paths of the ATF as a function of the specific operating step of the station.

When the replacement of the ATF is necessary, the ATF cooling circuit is interrupted to enable connection in series of the station of figure 1.

The interruption of the cooling circuit can take place in different ways according the availability of specific oleodynamic connections, the operator's capacities and the possibility of access to the gear shift structure.

Using the known solution of figure 1, the operator need not consider the flow direction of the ATF in order to carry out the connection. In fact, the pressure gauges 8, 9 detect the ATF pressure and enable automatically establishing the flow direction.

Therefore each tube can function as delivery or return: it is a control unit that controls the valve system in such a way as to establish the ATF path as a function of the detected flow direction.

Apart from the structural variants, at least two functioning steps of the station are distinguished: a recirculation step and a flushing step.

The recirculation step takes place as soon as the station is connected to the cooling circuit of the ATF. During this step, the vehicle is still in motion and the ATF continues to circulate in the cooling circuit and in the station, entering by one tube and exiting from the other.

To carry out the replacement of the ATF the flushing step is used, which represents a dynamic replacement of the ATF, i.e. with the engine functioning. In particular, the flow of the exhausted ATF (to be replaced) is deviated towards the discharge tank 6, while the first pump 5 collects the fresh ATF from the other tank 4 and sends it towards the gear shift.

The above-described solution is however not free from limits, which the present invention intends to obviate.

As is known, an ATF replacement service might be accompanied, in some circumstances, by the replacement of the filter of the gear shift with the relative seal; this operation necessarily includes the demounting of some parts of the gear shift.

The solution of figure 1, while automatically detecting the flow direction of the ATF, does not enable the operator to establish whether it is necessary also to replace the filter. At present, the decision to replace the filter is taken by the operator beforehand, on an empirical basis, for example when a specific kilometre-based threshold for each vehicle has been exceeded.

Document US 5,482,062 discloses an apparatus and a method for complete fluid exchange and internal system flushing of an automatic transmission system as the transmission system operates. The apparatus is connectable to the transmission system and, in a preferred embodiment, is operable at an adjustable output fluid flow rate and pressure setting to act as an independent fluid supply and storage system for the automatic transmission system in the course of a fluid exchange and fluishing operation. In addition to its application to an automatic transmission system, the apparatus of the present invention can be used to flush the fuel system of any internal combustion engine.

In this context, the technical task underpinning the present invention is to disclose an apparatus for replacing an exhausted transmission fluid of an automatic gear shift of a motor vehicle with a fresh transmission fluid that obviates the drawbacks of the prior art cited in the foregoing.

In particular, an aim of the present invention is to disclose an apparatus for replacing an exhausted transmission fluid of an automatic gear shift of a motor vehicle with a fresh transmission fluid, which enables establishing whether it is necessary also to replace the filter of the gear shift due to clogging thereof.

The specified technical task and the specified aims are substantially attained by an apparatus for replacing an exhausted transmission fluid of an automatic gear shift of a motor vehicle with a fresh transmission fluid, comprising:
- a first tube and a second tube, respectively connectable to two different access points of the automatic gear shift;
- a first tank containing the fresh transmission fluid;
- a second tank configured to receive the exhausted transmission fluid;
- a first three-way electro valve configured to establish a selective communication between the first tube and the first tank or between the first tube and the second tank;
- a second three-way electro valve configured to establish a selective communication between the second tube and the first tank or between the first tube and the second tank;
- a first pressure gauge and a second pressure gauge which are operatively active respectively on the first tube and on the second tube so as to detect the pressure of the transmission fluid, the apparatus comprises an oleodynamic manifold in turn comprising a box-like casing housing the three-way electro valves and the pressure gauges a first calibrated throttling is present between the first pressure gauge and the first three-way electro valve and a second calibrated throttling is present between the second pressure gauge and the second three-way electro valve.

The apparatus preferably comprises a temperature sensor housed in the box-like casing of the oleodynamic manifold.

The temperature sensor is preferably interposed between the first three-way electro valve and the second three-way electro valve.

The apparatus preferably comprises a driving unit configured to drive said first and said second three-way electro valves in a complementary way so that when the first tube communicates with the first tank the second tube communicates with the second tank, and when the first tube communicates with the second tank the second tube communicates with the first tank.

The apparatus preferably comprises a first pump configured to suck the fresh transmission fluid from the first tank.

The apparatus preferably also comprises a second pump configured to convey the exhausted transmission fluid to the second tank.

The apparatus preferably comprises two visual level indicators, respectively arranged on the first tube and on the second tube.

The apparatus preferably also comprises
- first weighing means operatively active on the first tank to detect the weight of the fresh transmission fluid contained therein;
- second weighing means operatively active on said second tank to detect the weight of the exhausted transmission fluid contained therein.

Further characteristics and advantages of the present invention will become more apparent from the indicative and thus non-limiting description of a preferred, but not exclusive, embodiment of an apparatus for replacing an exhausted transmission fluid of an automatic gear shift of a motor vehicle with a fresh transmission fluid, as illustrated in the appended drawings, in which:
- figure 1 illustrates the oleodynamic diagram of an apparatus for replacing an exhausted transmission fluid of an automatic gear shift of a motor vehicle with a fresh transmission fluid, according to the prior art;
- figure 2 illustrates a simplified oleodynamic diagram of an apparatus for replacing an exhausted transmission fluid of an automatic gear shift of a motor vehicle with a fresh transmission fluid, according to the present invention;
- figure 3 schematically illustrates the connection of the apparatus of figure 2 with the cooling circuit of a gear shift.

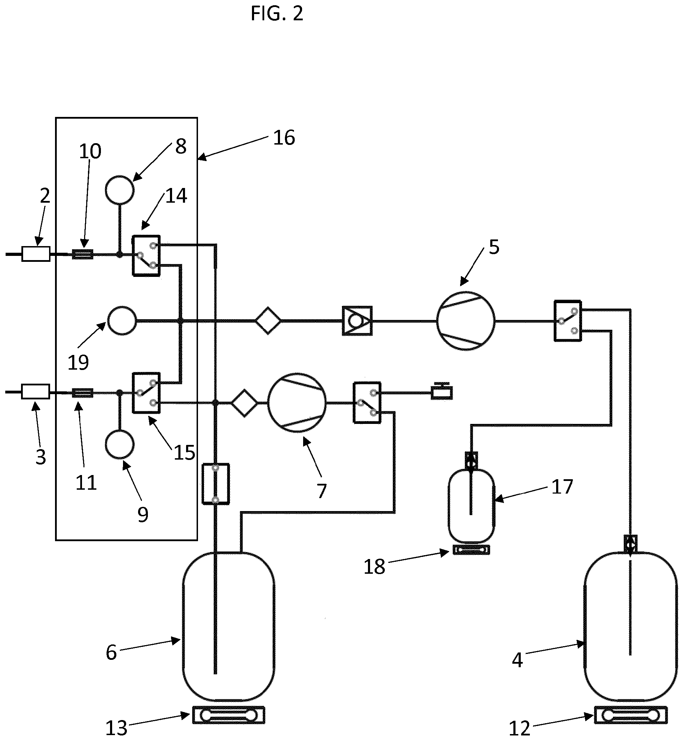

With reference to figure 2, reference numeral 1 denotes an apparatus (or station) for replacing an exhausted transmission fluid of an automatic gear shift 200 of a motor vehicle with a fresh transmission fluid.

For the sake of brevity, in the following the above-mentioned transmission fluid shall be indicated by the acronym ATF, well known in the specific sector.

The automatic gear shift 200 is external to the apparatus 1 and is therefore not a part of the invention.

In particular, the automatic gear shift 200 comprises a cooling circuit 100 of the ATF.

The automatic gear shift 200 also comprises a radiator 101, a sump 102 containing the ATF and a pump 103. These elements are all external to the apparatus 1 disclosed herein. The introduction thereof in this description is uniquely linked to reasons of clarity of illustration.

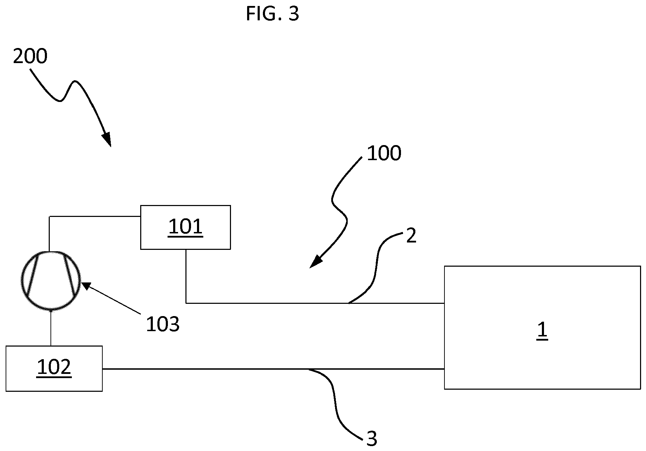

The apparatus 1 comprises a first tube 2 and a second tube 3, respectively connectable to two different access points of the automatic gear shift 200. For example, in the embodiment described and illustrated herein, the two different points of access consist of two points of interruption of the cooling circuit 100. For example, in figure 3 it can be observed that one of the tubes 2 is connected to the radiator 101 of the automatic gear shift 200, while the other tube 3 is connected to the ATF sump 102.

The fresh ATF is contained in a first tank 4, while the exhausted ATF is contained in a second tank 6.

The apparatus 1 comprises two three-way electro valves 14, 15, in particular:
- a first three-way electro valve 14 configured to establish a selective communication between the first tube 2 and the first tank 4 or between the first tube 2 and the second tank 6;
- a second three-way electro valve 15 configured to establish a selective communication between the second tube 3 and the first tank 4 or between the second tube 3 and the second tank 6.

A first pressure gauge 8 is inserted on the first tube 2 and a second pressure gauge 9 is inserted on the second tube 3 so as to detect the pressure of the ATF.

Originally the two three-way electro valves 14, 15 and the two pressure gauges 8, 9 are housed in a box-like casing of an oleodynamic manifold 16. The box-like casing also houses two throttles or calibrated holes 112, 113, that is, a first calibrated throttling 112 between the first pressure gauge 8 and the first three-way electro valve 14 and a second calibrated throttling 113 between the second pressure gauge 9 and the second three-way electro valve 15. A temperature sensor 19 is also preferably housed inside the box-like casing. In particular, the temperature sensor 19 is interposed between the two three-way electro valves 14, 15.

A driving unit (not illustrated) is included that is configured to drive the two three-way electro valves 14, 15 in a complementary way, i.e:
- when the first tube 2 communicates with the first tank 4, the second tube 3 communicates with the second tank 6;
- when the first tube 2 communicates with the second tank 6, the second tube 3 communicates with the first tank 4.

Up to now, and generically, two tubes 2, 3 have been introduced, connectable to the cooling circuit 100.

In this context, by delivery tube is meant the tube supplying the fresh ATF to the cooling circuit 100 during a flushing step, while by return tube is meant the tube receiving the exhausted ATF during the same flushing step.

In the embodiment described and illustrated in the present description, each of the tubes 2, 3 can function both as a delivery tube and as a return tube. The choice is not made by the operator, but is determined by automatically detecting the flow direction of the ATF (a method already known).

For the sake of simplicity, the first tube 2 represents the delivery tube, while the second tube 3 represents the return tube.

A first pump 5 is preferably interposed between the first tank 4 and the delivery tube 2, which is configured to force the flow of the fresh ATF from the first pump 4 to the delivery tube 2.

The exhausted ATF, coming from the return tube 3, is collected in a second tank 6.

A second pump 7 is preferably interposed between the return tube 3 and the second tank 6, which is configured to force the flow of the exhausted ATF from the return tube 3 to the second tank 6.

Each of the two pumps 5, 7 is activated by a corresponding motor (not illustrated).

In figure 2 two separate lines or paths of the ATF can be identified:
- a delivery line which goes from the first tank 4 to the delivery tube 2 passing through the first pump 5 in which the fresh ATF flows;
- a return line which goes from the return tube 3 to the second tank 6, in which the exhausted ATF flows.

A corresponding visual level indicator 10, 11 is preferably inserted on the delivery line and on the return line. For example, as a visual level indicator a portion of tube can be used, made of a transparent material, such as glass or plastic or an acrylic material.

In the embodiment described and illustrated herein, the detecting of the quantity of ATF contained in the two tanks 4, 6 is carried out by weighing means 12, 13. In particular, first weighing means 12 are operatively active on the first tank 4, which preferably consist of an electronic scale. Second weighing means 13 are operatively active on the second tank 6, which also preferably consist of an electronic scale.

In an alternative embodiment (not illustrated), the detecting of the quantity of ATF contained in the two tanks 4, 6 is carried out using optical sensors. The apparatus 1 further comprises means (not illustrated) to fill or top up the two tanks 4, 6, for example funnels or connecting tubes between the funnels and tanks 4, 6.

The apparatus 1 preferably further comprises a third tank 17 containing a washing fluid and corresponding third weighing means 18, for example consisting of an electronic scale.

The apparatus 1 further comprises a system of valves, filters and taps (of known type) to establish the ATF flows as a function of the various operating steps, among which the already-mentioned recirculation and flushing steps.

The driving unit of the three-way electro valve 14, 15 is part of a control unit configured to drive the entire system of valves and taps in response (at least in part) to the pressure values of the ATF detected by the pressure gauges 8, 9, to the temperature value detected by the temperature sensor 19 and to the weights detected by the scales 12, 13, 18.

In particular, during the flushing step, the control unit 16 receives in inlet the weights detected by the scales 12, 13 operating on the first and second tank 4, 6 and controls the system of valves and taps in such a way as to guarantee a substantial equilibrium between the quantity of exhausted ATF which is removed from the cooling circuit 100 and the quantity of fresh ATF which is injected into the cooling circuit 100.

The apparatus 1 preferably comprises a frame (not illustrated) housing the various components. The frame is preferably provided with wheels to enable the user to easily displace the apparatus 1.

From the description the characteristics of the apparatus for replacing an exhausted transmission fluid of an automatic gear shift of a motor vehicle with a fresh transmission fluid clearly emerge, as do the advantages thereof.

In particular, the single manifold comprising the two pressure gauges, the calibrated throttling and the three-way electro valves enables detection not only of the direction but also of the entity of the ATF flow during the recirculation step. This detection enables an understanding of whether the ATF is clogged by dirt accumulated in the filter (for example sludge, filings from the gears, etc.), signalling to the operator that this is time to carry out the replacement of the filter.

The use of a single manifold enables a minimising of the length of the portion of circuit, guaranteeing that the two measurement points are at the same temperature. In fact, the pressure drop depends on the density of the ATF, which in turn depends on the temperature. For this precise reason, it has been chosen to position the temperature sensor centrally between the two electro valves (and pressure gauges), thus guaranteeing greater accuracy in the establishing of whether it is necessary or not to replace the filter.

## Claims

1. Apparatus (1) for replacing an exhausted transmission fluid of an automatic gear shift (200) of a motor vehicle with a fresh transmission fluid, comprising:
a first tube (2) and a second tube (3), respectively connectable to two different access points of said automatic gear shift (200);
a first tank (4) containing the fresh transmission fluid;
a second tank (6) configured to receive the exhausted transmission fluid;
a first three-way electro valve (14) configured to establish a selective communication between said first tube (2) and said first tank (4) or between said first tube (2) and said second tank (6);
a second three-way electro valve (15) configured to establish a selective communication between said second tube (3) and said first tank (4) or between said second tube (3) and said second tank (6);
a first pressure gauge (8) and a second pressure gauge (9) which are operatively active respectively on the first tube (2) and on the second tube (3) so as to detect the pressure of the transmission fluid,
the apparatus (1) comprises an oleodynamic manifold (16) in turn comprising a box-like casing housing said three-way electro valves (14, 15) and said pressure gauges (8, 9), and a first calibrated throttling (112) is present between said first gauge (8) and said first three-way electro valve (14) and a second calibrated throttling (113) is present between said second gauge (9) and said second three-way electro valve (15).

2. Apparatus (1) according to claim 1, further comprising a temperature sensor (19) housed in the box-like casing of said oleodynamic manifold (16).

3. Apparatus (1) according to claim 2, wherein said temperature sensor (19) is interposed between said first three-way electro valve (14) and said second three-way electro valve (15).

4. Apparatus (1) according to any one of the preceding claims, further comprising a driving unit configured to drive said first and said second three-way electro valves (14, 15) in a complementary way so that when the first tube (2) communicates with the first tank (4) the second tube (3) communicates with the second tank (6), and when the first tube (2) communicates with the second tank (6) the second tube (3) communicates with the first tank (4).

5. Apparatus (1) according to any one of the preceding claims, further comprising a first pump (5) configured to suck the fresh transmission fluid from the first tank (4).

6. Apparatus (1) according to any one of the preceding claims, further comprising a second pump (7) configured to convey the exhausted transmission fluid to the second tank (6).

7. Apparatus (1) according to any one of the preceding claims, further comprising two visual level indicators (10, 11), respectively arranged on the first tube (2) and on the second tube (3).

8. Apparatus (1) according to any one of the preceding claims, further comprising:
first weighing means (12) operatively active on said first tank (4) to detect the weight of the fresh transmission fluid contained therein;
second weighing means (13) operatively active on said second tank (6) to detect the weight of the exhausted transmission fluid contained therein.

## Patentansprüche

1. Vorrichtung (1), um ein verbrauchtes Transmissionsfluid eines Automatikgetriebes (200) eines Kraftfahrzeugs durch ein frisches Transmissionsfluid zu ersetzen, umfassend:
ein erstes Rohr (2) und ein zweites Rohr (3), die jeweils mit zwei verschiedenen Zugangspunkten des Automatikgetriebes (200) verbunden sind;
einen ersten Tank (4), der das frische Transmissionsfluid enthält;
einen zweiten Tank (6), der konfiguriert ist, um das verbrauchte Transmissionsfluid zu empfangen;
ein erstes Dreiwege-Elektroventil (14), das konfiguriert ist, um eine selektive Kommunikation zwischen dem ersten Rohr (2) und dem ersten Tank (4) oder zwischen dem ersten Rohr (2) und dem zweiten Tank (6) herzustellen;
ein zweites Dreiwege-Elektroventil (15), das konfiguriert ist, um eine selektive Kommunikation zwischen dem zweiten Rohr (3) und dem ersten Tank (4) oder zwischen dem zweiten Rohr (3) und dem zweiten Tank (6) herzustellen;
ein erstes Manometer (8) und ein zweites Manometer (9), die jeweils am ersten Rohr (2) und am zweiten Rohr (3) betriebswirksam sind, um den Druck des Transmissionsfluids zu erfassen,
wobei die Vorrichtung (1) einen oleodynamischen Verteiler (16) umfasst, der wiederum ein kastenartiges Gehäuse umfasst, das die Dreiwege-Elektroventile (14, 15) und die Manometer (8, 9) unterbringt und
eine erste kalibrierte Drosselung (112) zwischen dem ersten Manometer (8) und dem ersten Dreiwege-Elektroventil (14) vorhanden ist und eine zweite kalibrierte Drosselung (113) zwischen dem zweiten Manometer (9) und dem zweiten Dreiwege-Elektroventil (15) vorhanden ist.

2. Vorrichtung (1) nach Anspruch 1, ferner umfassend einen Temperatursensor (19), der in dem kastenartigen Gehäuse des oleodynamischen Verteilers (16) untergebracht ist.

3. Vorrichtung (1) nach Anspruch 2, wobei der Temperatursensor (19) zwischen dem ersten Dreiwege-Elektroventil (14) und dem zweiten Dreiwege-Elektroventil (15) angeordnet ist.

4. Vorrichtung (1) nach einem der vorhergehenden Ansprüche, ferner umfassend eine Antriebseinheit, die konfiguriert ist, um das erste und das zweite Dreiwege-Elektroventil (14, 15) auf komplementäre Weise anzutreiben, so dass, wenn das erste Rohr (2) mit dem ersten Tank (4) kommuniziert, kommuniziert das zweite Rohr (3) mit dem zweiten Tank (6), und wenn das erste Rohr (2) mit dem zweiten Tank (6) kommuniziert, kommuniziert das zweite Rohr (3) mit dem ersten Tank (4).

5. Vorrichtung (1) nach einem der vorhergehenden Ansprüche, ferner umfassend eine erste Pumpe (5), die konfiguriert ist, um das frische Transmissionsfluid aus dem ersten Tank (4) abzusaugen.

6. Vorrichtung (1) nach einem der vorhergehenden Ansprüche, ferner umfassend eine zweite Pumpe (7), die konfiguriert ist, um das verbrauchte Transmissionsfluid zum zweiten Tank (6) zu fördern.

7. Vorrichtung (1) nach einem der vorhergehenden Ansprüche, ferner umfassend zwei visuelle Füllstandsanzeiger (10, 11), die jeweils auf dem ersten Rohr (2) und auf dem zweiten Rohr (3) angeordnet sind.

8. Vorrichtung (1) nach einem der vorhergehenden Ansprüche, ferner umfassend:
erste Wägemittel (12), die betriebswirksam an dem ersten Tank (4) aktiv sind, um das Gewicht des darin enthaltenen frischen Transmissionsfluids zu erfassen;
zweite Wägemittel (13), die betriebswirksam an dem zweiten Tank (6) aktiv sind, um das Gewicht des darin enthaltenen verbrauchten Transmissionsfluids zu erfassen.

## Revendications

1. Appareil (1) pour remplacer un fluide de transmission usagé d'une boîte de vitesses automatique (200) d'un véhicule à moteur par un fluide de transmission neuf, comprenant :
un premier tube (2) et un second tube (3), pouvant respectivement se raccorder à deux points d'accès différents de ladite boîte de vitesses automatique (200) ;
un premier réservoir (4) contenant le fluide de transmission neuf ;
un second réservoir (6) configuré pour recevoir le fluide de transmission usagé ;
une première électrovanne à trois voies (14) configurée pour établir une communication sélective entre ledit premier tube (2) et ledit premier réservoir (4) ou entre ledit premier tube (2) et ledit second réservoir (6) ;
une deuxième électrovanne à trois voies (15) configurée pour établir une communication sélective entre ledit second tube (3) et ledit premier réservoir (4) ou entre ledit second tube (3) et ledit second réservoir (6) ;
un premier manomètre (8) et un second manomètre (9) étant actifs de manière fonctionnelle respectivement sur le premier tube (2) et sur le second tube (3) de manière à détecter la pression du fluide de transmission,
l'appareil (1) comprend un collecteur oléodynamique (16) comprenant à son tour un carter en forme de boîte logeant lesdites électrovannes à trois voies (14, 15) et lesdits manomètres (8, 9), et
un premier étranglement calibré (112) est présent entre ledit premier manomètre (8) et ladite première électrovanne à trois voies (14) et un second étranglement calibré (113) est présent entre ledit second manomètre (9) et ladite seconde électrovanne à trois voies (15).

2. Appareil (1) selon la revendication 1, comprenant de plus un capteur de température (19) logé dans le carter en forme de boîte dudit collecteur oléodynamique (16).

3. Appareil (1) selon la revendication 2, dans lequel ledit capteur de température (19) est interposé entre ladite première électrovanne à trois voies (14) et ladite seconde électrovanne à trois voies (15).

4. Appareil (1) selon l'une quelconque des revendications précédentes, comprenant de plus une unité de commande configurée pour commander lesdites première et seconde électrovannes à trois voies (14, 15) d'une manière complémentaire de sorte que lorsque le premier tube (2) communique avec le premier réservoir (4), le second tube (3) communique avec le second réservoir (6), et lorsque le premier tube (2) communique avec le second réservoir (6), le second tube (3) communique avec le premier réservoir (4).

5. Appareil (1) selon l'une quelconque des revendications précédentes, comprenant de plus une première pompe (5) configurée pour aspirer le fluide de transmission neuf du premier réservoir (4).

6. Appareil (1) selon l'une quelconque des revendications précédentes, comprenant de plus une seconde pompe (7) configurée pour acheminer le fluide de transmission usagé vers le second réservoir (6).

7. Appareil (1) selon l'une quelconque des revendications précédentes, comprenant de plus deux indicateurs visuels (10, 11) de niveau disposés, respectivement, sur le premier tube (2) et sur le second tube (3).

8. Appareil (1) selon l'une quelconque des revendications précédentes, comprenant de plus :
des premiers moyens de pesage (12) fonctionnellement actifs sur ledit premier réservoir (4) pour détecter le poids du fluide de transmission neuf contenu en son sein ;
des seconds moyens de pesage (13) fonctionnellement actifs sur ledit second réservoir (6) pour détecter le poids du fluide de transmission usagé contenu en son sein.
